(19) Europäisches Patentamt / European Patent Office / Office européen des brevets

(11) **EP 3 208 907 B1**

(12) **FASCICULE DE BREVET EUROPEEN**

(45) Date de publication et mention
de la délivrance du brevet:
**05.09.2018 Bulletin 2018/36**

(51) Int Cl.:
*H02J 3/18* *(2006.01)*       *H02J 3/38* *(2006.01)*
*G05F 1/66* *(2006.01)*       *H02J 5/00* *(2016.01)*

(21) Numéro de dépôt: **17155581.6**

(22) Date de dépôt: **10.02.2017**

(54) **PROCEDE DE CONTROLE D'UN GENERATEUR VIRTUEL**

STEUERUNGSVERFAHREN EINES VIRTUELLEN GENERATORS

METHOD FOR CONTROLLING A VIRTUAL GENERATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.02.2016 FR 1651248**

(43) Date de publication de la demande:
**23.08.2017 Bulletin 2017/34**

(73) Titulaire: **Schneider Electric Industries SAS
92500 Rueil-Malmaison (FR)**

(72) Inventeurs:
• **RAHMANI, Mustapha**
**38050 GRENOBLE Cedex 9 (FR)**
• **HERRIOT, Yann**
**38050 GRENOBLE Cedex 9 (FR)**
• **GUYON-AUBERT, Caroline**
**38050 GRENOBLE Cedex 9 (FR)**
• **GUALINO, David**
**38050 GRENOBLE Cedex 9 (FR)**
• **DENTELLA, Alain**
**38050 GRENOBLE Cedex 9 (FR)**
• **LECHAT-SANJUAN, Sylvain**
**38050 GRENOBLE Cedex 9 (FR)**
• **GANDANEGARA, Grace**
**38050 GRENOBLE Cedex 9 (FR)**

(74) Mandataire: **Brevalex
95, rue d'Amsterdam
75378 Paris Cedex 8 (FR)**

(56) Documents cités:
**WO-A1-2012/116559     US-A1- 2015 115 721**

• **MIGUEL TORRES ET AL: "Virtual Synchronous
Generator: A Control Strategy to Improve
Dynamic Frequency Control in Autonomous
Power Systems", ENERGY AND POWER
ENGINEERING, vol. 05, no. 02, 15 avril 2013
(2013-04-15), pages 32-38, XP055300615, US
ISSN: 1949-243X, DOI: 10.4236/epe.2013.52A005**
• **HUSSAM ALATRASH ET AL: "Generator
Emulation Controls for Photovoltaic Inverters",
IEEE TRANSACTIONS ON SMART GRID, IEEE,
USA, vol. 3, no. 2, 21 mai 2012 (2012-05-21), pages
996-1011, XP011445368, ISSN: 1949-3053, DOI:
10.1109/TSG.2012.2188916**

EP 3 208 907 B1

## Description

### DOMAINE TECHNIQUE

La présente invention concerne le domaine des micro réseaux de production et de distribution électrique. Plus particulièrement, l'invention concerne un procédé de contrôle d'un générateur virtuel, ainsi qu'un générateur virtuel permettant de reproduire le fonctionnement d'un groupe électrogène.

### ÉTAT DE LA TECHNIQUE ANTÉRIEURE

Un micro réseau (« microgrid » selon la terminologie Anglo-Saxonne) est généralement un réseau électrique local destiné à produire et distribuer de l'énergie électrique dans des régions isolées et distantes des grands centres de production d'énergie électrique. Les régions isolées sont par exemples des îles, des régions montagneuses, ou encore des zones désertiques. Le principe de micro réseau s'applique également lorsqu'un bâtiment, quartier, campus, ou autre entité connecté à un large réseau de distribution souhaite gérer sa production d'énergie autrement et augmenter sa capacité de résilience.

Le principal intérêt des micro réseaux est qu'ils fonctionnent de manière autonome (en mode îloté, sans connexion au réseau public), et se trouvent à proximité des zones de consommation (les charges). Ainsi, les pertes inhérentes aux réseaux de distributions longues distances sont limitées.

L'autonomie énergétique du micro réseau est généralement assurée par des sources d'énergies électriques de différents types parmi lesquelles les groupes électrogènes occupent une place importante (nous parlons dans ce cas de source d'énergie synchrone). En effet, du point de vue économique, un groupe électrogène représente un faible investissement de départ, et assure une production en électricité suffisamment flexible pour absorber des pics de consommations aux heures de pointes. Cependant, leur fonctionnement nécessite de grandes quantités de diesel, ce qui alourdit, par conséquent, la facture énergétique, mais augmente également la pollution atmosphérique.

Afin de pallier à ces problèmes économiques et environnementaux, les micro réseaux, sont hybrides, et comprennent également des sources d'énergie renouvelable telles que des sources d'énergie photovoltaïque. A cet égard, le concept de générateur virtuel ou générateur virtuel synchrone (« Synchronous Virtual Generator » selon la terminologie Anglo-Saxonne), et comprenant une machine virtuelle synchrone (« Synchronous Virtual Machine » selon la terminologie Anglo-Saxonne), a été développée, et l'homme du métier pourra consulter le document [1] décrivant en détails les fondements des générateurs virtuels. Un générateur virtuel comprend, en général, un système de production d'électricité, tel que des panneaux photovoltaïques, et un onduleur. Les panneaux photovoltaïques produisent alors une puissance électrique en générant une tension et un courant continus. Lesdits tension et courant continus sont ensuite convertis par l'onduleur en une tension et un courant alternatifs. L'onduleur est généralement asservi selon une loi de commande de manière à émuler le comportement d'un générateur synchrone avec statisme (« Droop » selon la terminologie Anglo-Saxonne), d'où le nom de générateur virtuel. Il est ainsi possible de connecter électriquement en parallèle des générateurs synchrones et des générateurs virtuels.

Cependant, les cycles de production par les sources d'énergie renouvelable sont régis par les cycles journaliers et les conditions climatiques (nous parlons également d'intermittence de la production de puissance électrique). Par exemple, des panneaux photovoltaïques ne produisent de la puissance électrique qu'en journée et sous un ensoleillement suffisant. Il n'y a, donc, pas toujours une adéquation parfaite entre la puissance consommée par le micro réseau et la puissance produite par les sources d'énergie renouvelable. Autrement dit, les pics de production de puissance électrique par les sources d'énergie renouvelable ne correspondent pas aux pics de consommation. Il a alors été proposé de coupler les onduleurs avec un système central d'accumulation d'énergie dimensionné pour l'intégralité du micro réseau, et capable de délivrer de l'énergie électrique pendant les pics de consommation, et d'emmagasiner un surplus d'énergie produit par les sources d'énergie renouvelable pendant les pics de production.

Cependant, cette solution s'appuie sur un système central d'accumulation global dimensionné pour un réseau donné, et n'est donc pas évolutive. En effet, l'ajout de panneaux photovoltaïques supplémentaires peut nécessiter le remplacement du système central d'accumulation d'énergie.

Aussi, cette solution présente un coût qui n'est pas compatible avec les économies souhaitées lors de l'implantation d'un micro réseau.

Par ailleurs, contrairement à un groupe électrogène, la puissance électrique délivrée par la source d'énergie renouvelable est soumise aux fluctuations climatiques, générant de fait une puissance électrique fluctuante. Par exemple, l'ensoleillement peut varier de manière très rapide, et dans d'infimes proportions, générant des pics et des creux de puissance électrique produite par un panneau photovoltaïque. Ces fluctuations sont une source d'instabilité que le micro réseau ne peut tolérer.

En outre, un onduleur classique alimenté en puissance électrique, par exemple par une source d'énergie renouvelable, ne peut généralement pas former le réseau. Selon la terminologie Anglo-Saxonne, nous disons qu'il est « Grid-Tie ». Par opposition, un système formant le réseau est dit, selon la terminologie Anglo-Saxonne, « Grid-Forming ». Par former le réseau, nous entendons générer une tension alternative d'amplitude et de fréquence bien définie, constantes ou suivant une courbe de statisme.

Ainsi, la part des sources d'énergie renouvelable ne peut excéder, par convention, une valeur comprise entre 20 et 30 % (nous parlons de taux de pénétration des sources d'énergie renouvelable) de sorte qu'au moins un moyen de production de puissance électrique non intermittent, par exemple un groupe électrogène, est en marche en permanence. Cette limitation confère au micro réseau la stabilité nécessaire, mais, de fait, limite les économies réalisables.

Le document US 2015/115721 divulgue un système de production de puissance électrique.

Le document Torres et al, "Virtual Synchronous Generator: A Control Strategy to Improve Dynamic Frequency Control in Autonomous Power Systems", Energy and Power Engineering, 2013, 5, 32-38, divulgue un générateur virtuel.

Un but de l'invention est alors de proposer un procédé de contrôle d'un générateur virtuel et un générateur virtuel permettant d'améliorer l'adéquation entre la puissance électrique produite par le générateur virtuel et la puissance électrique effectivement consommée par la charge.

Un autre but de l'invention est, également, de proposer un procédé de contrôle d'un générateur virtuel et un générateur virtuel permettant de réduire (lisser) l'effet des fluctuations de puissance électrique de la source d'énergie renouvelable sur le micro réseau.

Un autre but de l'invention est également de proposer un procédé de contrôle d'un générateur virtuel et un générateur virtuel permettant d'augmenter le taux de pénétration des sources d'énergies renouvelables intermittentes sans toutefois dégrader la stabilité du micro réseau.

**EXPOSÉ DE L'INVENTION**

Les buts de l'invention sont, au moins en partie, atteints, par un procédé de contrôle d'un générateur virtuel comprenant au moins une source d'énergie renouvelable, un système d'accumulation comprenant une réserve de puissance et/ou d'énergie, un onduleur et une loi de commande, le générateur virtuel délivrant à un micro réseau une puissance électrique active P/réactive Q de tension V et de courant I, lesdits tension V et courant I présentant une fréquence f, ladite puissance électrique active P/réactive Q contrôlant par statisme, respectivement, la fréquence f et la tension efficace $V_{rms}$ de la tension V, le procédé étant remarquable en ce qu'il comprenant un contrôle du générateur virtuel par la loi de commande pour qu'il exécute un ajustement de la puissance active P/réactive délivrée au micro réseau, ledit ajustement étant adapté pour compenser une variation de la puissance active/réactive consommée par le micro réseau, le système d'accumulation applique une tension $V_{ref}$ continue à des premières bornes de la source d'énergie renouvelable de sorte que la source d'énergie renouvelable délivre une puissance $P_{sr}$, ladite puissance $P_{sr}$

est susceptible de présenter des fluctuations de puissance, le système d'accumulation est contrôlé pour compenser les fluctuations.

Par compenser une variation de la puissance électrique active/réactive consommée par le micro réseau, nous entendons fournir de la puissance électrique active/réactive additionnelle en cas d'un appel de charge de la part du micro réseau, et réduire la puissance active/réactive délivrée dès lors que la consommation du micro réseau diminue. La compensation de la variation de la puissance électrique active P/réactive Q est exécutée de manière à équilibrer la puissance électrique active P/réactive Q délivrée par le générateur virtuel avec la puissance électrique active P/réactive Q consommée par le micro réseau. La mise en oeuvre de ladite compensation est permise par la présence du système d'accumulation et de sa réserve de puissance et/ou d'énergie. La réserve de puissance et/ou d'énergie peut fournir de la puissance active P/réactive Q au micro réseau lors d'un appel de puissance. Le système d'accumulation est également adapté pour accumuler de la puissance active P/réactive Q produite par la source d'énergie renouvelable et non consommée par le micro réseau.

Ainsi, le procédé selon l'invention permet de reproduire l'inertie d'un groupe électrogène, conférant ainsi la stabilité nécessaire pour l'alimentation en puissance active P/réactive Q du micro réseau. En effet, la loi de commande permet d'équilibrer les puissance active P/réactive Q délivrée et consommée, respectivement, par le générateur virtuel et le micro réseau. La loi de commande comprend les équations différentielles (les équations électromécaniques) régissant le fonctionnement d'un groupe électrogène, et entre autre l'équation différentielle mécanique modélisant la dynamique d'un rotor dudit groupe électrogène. La loi de commande selon l'invention impose donc au générateur virtuel de se comporter comme un groupe électrogène.

Ce comportement induit par la loi de commande est réalisable grâce au système d'accumulation qui fait partie intégrante du générateur virtuel selon l'invention.

Contrairement à l'état de la technique, le générateur virtuel comprenant la source d'énergie renouvelable, et le système d'accumulation s'adapte aux besoins du micro réseau sans que ce dernier ne soit affecté.

Par ailleurs, la compensation de la variation de la puissance active P/réactive Q consommée par le micro réseau induit également un ajustement, respectivement, de la fréquence f de la tension V, et de la tension efficace $V_{rms}$ de la tension V par statisme (« Droop » selon la terminologie Anglo-Saxonne).

Le système d'accumulation peut également absorber (emmagasiner) de la puissance électrique dès lors que cette dernière n'est pas consommée par le micro réseau. Ainsi, des pics de fluctuations de la puissance électrique produite par la source d'énergie renouvelable sont absorbés par le système d'accumulation. Ainsi, les fluctuations de puissance électrique de la source d'énergie renouvelable sont compensées au sein du générateur virtuel par le système d'accumulation. Par conséquent, l'effet des fluctuations de puissance de la source d'énergie renouvelable sur le micro réseau est réduit.

Selon un mode de réalisation, la loi de commande est adaptée pour conférer au générateur virtuel, avantageusement via l'onduleur, la possibilité de former le réseau.

Selon un mode de réalisation, la loi de commande est adaptée pour connecter en parallèle le générateur virtuel avec des groupes électrogènes.

Selon un mode de réalisation, la tension $V_{ref}$ continue appliquée aux premières bornes de sortie est le résultat de la conversion d'une tension $V_{PS}$ continue, aux bornes d'un système de stockage, par un convertisseur DC/DC, le système de stockage et le convertisseur DC/DC étant compris dans le système d'accumulation.

La puissance délivrée par la source d'énergie renouvelable est dépendante de la tension $V_{ref}$ continue appliquée par le système d'accumulation.

Ainsi, le système d'accumulation peut ajuster la puissance $P_{sr}$ produite par la source d'énergie renouvelable en fonction des besoins du micro réseau. Autrement dit, le système d'accumulation peut limiter la puissance électrique produite par la source d'énergie renouvelable lorsque la consommation du réseau diminue.

Selon un mode de réalisation, la tension $V_{ref}$ est déterminée en fonction d'une puissance $P_{sr}$ de consigne que doit délivrer la source d'énergie renouvelable, la tension est déterminée par le système d'accumulation.

La puissance délivrée par la source d'énergie renouvelable est dépendante de la tension $V_{ref}$ continue appliquée par le système d'accumulation.

Ainsi, le système d'accumulation peut ajuster la puissance $P_{sr}$ produite par la source d'énergie renouvelable en fonction des besoins du micro réseau. Autrement dit, le système d'accumulation peut limiter la puissance électrique produite par la source d'énergie renouvelable lorsque la consommation du micro réseau diminue.

Par ailleurs, le système d'accumulation peut également limiter la puissance délivrée par la source d'énergie renouvelable dès lors que ledit système n'est plus en capacité d'absorber un surplus de puissance électrique susceptible d'être produite par la source d'énergie renouvelable et consommée par le micro réseau. Autrement dit, dès lors que l'état de charge du système d'accumulation dépasse un seuil donné, il est susceptible d'ajuster la tension $V_{ref}$ de sorte que la puissance $P_{sr}$ produite par la source d'énergie renouvelable est intégralement consommée par le micro réseau.

Selon un mode de réalisation, la tension $V_{ref}$ est déterminée par un balayage, par exemple par paliers, en tension des premières bornes de sortie, et par mesure de manière simultanée de l'intensité du courant produit par la source d'énergie renouvelable et de ladite tension.

Selon un mode de réalisation, le balayage en tension produit des variations de puissance de la puissance délivrée par la source d'énergie renouvelable, le système d'accumulation est contrôlé pour compenser lesdites variations pendant ledit balayage.

Selon un mode de réalisation, le procédé comprend une étape de mesure d'un état de charge du système d'accumulation.

Selon un mode de réalisation, la tension $V_{ref}$ est ajustée de sorte que, dès lors que le système d'accumulation présente un état de charge supérieur ou égal à un seuil de charge maximum $SoC_{max}$ prédéterminé, la puissance $P_{sr}$ est intégralement consommée par le micro réseau.

Selon un mode de réalisation, l'état de charge du système d'accumulation SoC est maintenu à une valeur supérieure à un état de charge minimum $SoC_{min}$.

Selon un mode de réalisation, une puissance $P_{acc}$ est délivrée par le système d'accumulation au micro réseau, via l'onduleur, dès lors que ledit micro réseau doit consommer un surplus de puissance $P_{sur}$ que la source d'énergie renouvelable n'est pas en mesure de fournir.

L'invention concerne également un générateur virtuel, adapté pour délivrer une puissance électrique active P/réactive Q de fréquence f et de tension efficace $V_{rms}$, à un micro réseau, comprenant :

- une source d'énergie renouvelable ;
- un système d'accumulation comprenant une réserve de puissance et/ou d'énergie ;
- un onduleur;
- une loi de commande ;

la loi de commande étant adaptée pour contrôler le générateur virtuel de sorte que le générateur virtuel délivre au micro réseau une puissance électrique active P/réactive Q de tension V et de courant I, lesdits tension V et courant I présentant une fréquence f, lesdites puissance électrique active P/réactive Q contrôlant par statisme, respectivement, la fréquence f et la tension efficace $V_{rms}$ de la tension V, et le générateur virtuel étant remarquable en ce qu'il exécute un ajustement de la puissance active P/réactive Q délivrée au micro réseau dès lors qu'une variation de la puissance active/réactive consommée par le micro réseau intervient, ledit ajustement étant adapté pour compenser la variation de puissance active P/réactive Q consommée, le système d'accumulation comprend un système de stockage et un convertisseur DC/DC, le convertisseur DC/DC reliant des bornes de sortie du système de stockage à des premières bornes de sortie de la source d'énergie renouvelable, et est adapté pour délivrer une tension $V_{ref}$ aux premières bornes de sortie, selon une consigne imposée par la loi de commande, à partir d'une tension $V_{PS}$ continue délivrée aux bornes de sortie du système de stockage. Par compenser une variation de la puissance électrique active/réactive consommée par le micro réseau, nous entendons fournir de la puissance électrique active P/réactive Q additionnelle en cas d'un appel de charge de la part du micro réseau, et réduire la puissance active P/réactive Q délivrée dès lors que la consommation du micro réseau diminue. La compensation de la variation de la puissance électrique active P/réactive Q est exécutée de manière à équilibrer la puissance électrique active P/réactive Q délivrée par le générateur virtuel avec la puissance électrique active P/réactive Q consommée par le micro réseau. La mise en oeuvre de ladite compensation est permise par la présence du système d'accumulation et de sa réserve de puissance et/ou d'énergie. La réserve de puissance et/ou d'énergie peut fournir de la puissance active P/réactive Q au micro réseau lors d'un appel de puissance. Le système d'accumulation est également adapté pour accumuler de la puissance active P produite par la source d'énergie renouvelable et non consommée par le micro réseau.

Ainsi, le générateur virtuel selon l'invention permet de reproduire l'inertie d'un groupe électrogène, conférant ainsi la stabilité nécessaire pour l'alimentation en puissance active P/réactive Q du micro réseau. En effet, la loi de commande permet d'équilibrer les puissance active P/réactive Q délivrée et consommée, respectivement, par le générateur virtuel et le micro réseau. La loi de commande comprend les équations différentielles (les équations électromécaniques) régissant le fonctionnement d'un groupe électrogène, et entre autre l'équation différentielle mécanique modélisant la dynamique d'un rotor dudit groupe électrogène. La loi de commande selon l'invention impose donc au générateur virtuel de se comporter comme un groupe électrogène.

Ce comportement induit par la loi de commande est réalisable grâce au système d'accumulation qui fait partie intégrante du générateur virtuel selon l'invention.

Contrairement à l'état de la technique, le générateur virtuel comprenant la source d'énergie renouvelable, et le système d'accumulation s'adapte aux besoins du micro réseau sans que ce dernier ne soit affecté.

Par ailleurs, la compensation de la variation de la puissance active P/réactive Q consommée par le micro réseau induit également un ajustement, respectivement, de la fréquence f et de la tension efficace $V_{rms}$ par statisme (« Droop » selon la terminologie Anglo-Saxonne).

Selon un mode de réalisation, la loi de commande est adaptée pour conférer au générateur virtuel, avantageusement via l'onduleur, la possibilité de former le réseau.

Selon un mode de réalisation, la loi de commande est adaptée pour connecter en parallèle le générateur virtuel avec des groupes électrogènes.

Selon un mode de réalisation, la loi de commande est adaptée pour déterminer la tension $V_{ref}$ en fonction d'une puissance $P_{sr}$ de consigne que doit délivrer la source d'énergie renouvelable via le système d'accumulation.

Ainsi, le système d'accumulation peut ajuster la puissance $P_{sr}$ produite par la source d'énergie renouvelable en fonction des besoins du micro réseau. Autrement dit, le système d'accumulation peut limiter la puissance électrique produite par la source d'énergie renouvelable lorsque la consommation du réseau diminue.

Selon un mode de réalisation, le système d'accumulation est adapté pour exécuter un balayage en tension des premières bornes de sortie, et pour mesurer de manière simultanée l'intensité du courant produit par la source d'énergie renouvelable et ladite tension.

Selon un mode de réalisation, la loi de commande est adaptée pour imposer au système d'accumulation de compenser des fluctuations de la puissance délivrée par la source d'énergie renouvelable.

Selon un mode de réalisation, la source d'énergie renouvelable comprend des panneaux photovoltaïques.

Selon un mode de réalisation, la source d'énergie renouvelable comprend des éoliennes.

## BRÈVE DESCRIPTION DES DESSINS

D'autres caractéristiques et avantages apparaîtrons dans la description qui va suivre des modes de mise en oeuvre du procédé de contrôle d'un générateur virtuel selon l'invention, donnés à titre d'exemples non limitatifs, en référence aux dessins annexés dans lesquels :

- la figure la est une représentation schématique d'un générateur virtuel selon l'invention comprenant une source d'énergie renouvelable, un système d'accumulation, un onduleur et une loi de commande, la loi de commande comprenant les blocs 100, 200, 210, 220, 230, 240, 250, 260 et 300 ;
- la figure 1b est une représentation schématique d'un générateur virtuel selon l'invention,
- la figure 2a représente, pour un ensoleillement donné, la puissance $P_{sr}$ (selon l'axe vertical) produite par un panneau photovoltaïque et délivrée par ses premières bornes de sortie, en fonction de la tension $V_{ref}$ (selon l'axe horizontal) appliquée auxdites premières bornes de sortie,

- la figure 2b représente, pour différents ensoleillements, la puissance $P_{sr}$ (selon l'axe vertical) produite par un panneau photovoltaïque en fonction de la tension $V_{ref}$ (selon l'axe horizontal) appliquée aux premières bornes de sortie,
- la figure 3 est une représentation de la fréquence f du courant et de la tension en fonction de la puissance active P délivrée par un groupe électrogène, la fréquence f étant représentée sur l'axe vertical et la puissance active P sur l'axe horizontal,
- la figure 4 est une représentation de la tension efficace $V_{rms}$ de la tension V en fonction de la puissance réactive Q délivrée par le groupe électrogène, la tension efficace $V_{rms}$ étant représentée sur l'axe vertical et la puissance réactive Q sur l'axe horizontal.

## EXPOSÉ DÉTAILLÉ DE MODES DE RÉALISATION PARTICULIERS

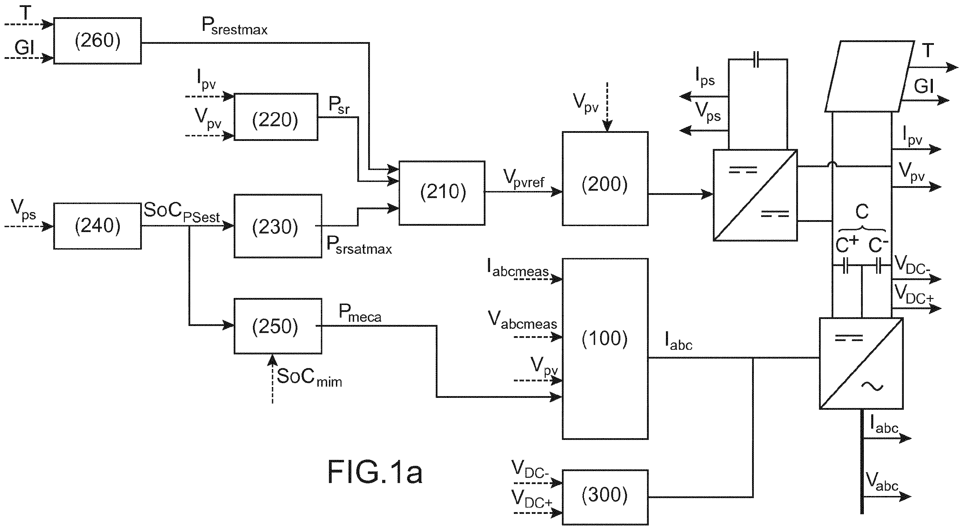

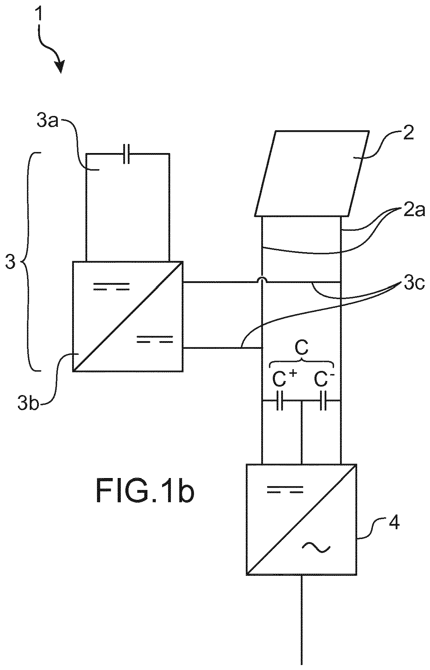

Les figures 1a et 1b représentent un générateur virtuel 1 selon l'invention.

Nous entendons par générateur virtuel 1, un générateur virtuel 1 se comportant comme un groupe électrogène. Le groupe électrogène délivre, à un micro réseau, une puissance électrique active P/réactive Q de tension V et de courant I, lesdits tension V et courant I présentant une fréquence f. La puissance active P/réactive Q contrôle par statisme, respectivement, la fréquence f et la tension efficace $V_{rms}$ de la tension V.

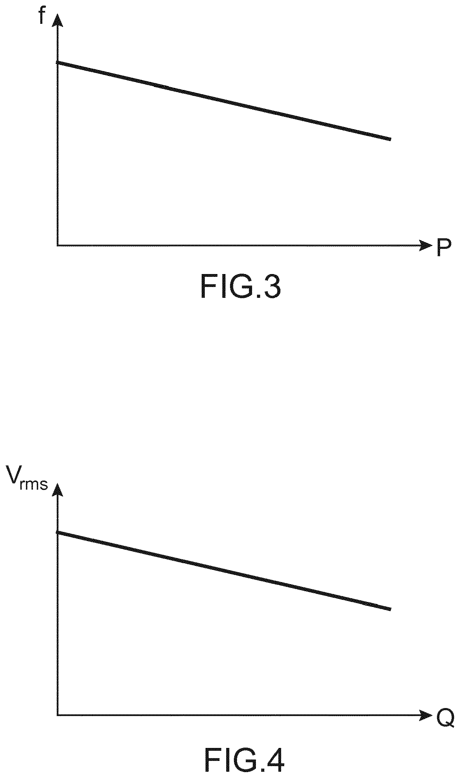

Le contrôle par statisme de la fréquence f par la puissance active P délivrée par le groupe électrogène est illustré à la figure 3. La fréquence f varie selon une fonction linéaire de la puissance active P, relative (en %), délivrée par le groupe électrogène. La fonction linéaire est caractérisée par une pente D portant le nom de statisme (« Droop » selon la terminologie Anglo-Saxonne). La fréquence f de la tension V et du courant I délivrés par le groupe électrogène est fonction de la vitesse de rotation de l'arbre du moteur du groupe électrogène. Ainsi, dès lors que la puissance active P délivrée par le groupe électrogène varie, la vitesse de rotation de l'arbre s'adapte de manière à ajuster également la fréquence f de la tension et du courant associés à la puissance électrique active P. Cette régulation de la vitesse de rotation de l'arbre moteur est exécutée par un bloc de régulation de vitesse (le bloc « Governor »).

Le contrôle par statisme de la tension efficace $V_{rms}$ de la tension V par la puissance réactive Q délivrée par le groupe électrogène est illustré à la figure 4. La tension efficace $V_{rms}$ varie selon une fonction linéaire de la puissance réactive Q, relative (en %), délivrée par le groupe électrogène. La fonction linéaire est caractérisée par une pente D portant le nom de statisme (« Droop » selon la terminologie Anglo-Saxonne). La tension efficace $V_{rms}$ est fonction de la puissance réactive Q délivrée par le groupe électrogène. Ainsi, dès lors que la puissance réactive Q délivrée par le groupe électrogène varie, la tension efficace $V_{rms}$ est ajustée en fonction de la puissance électrique réactive Q Un groupe électrogène comprend généralement un rotor entraîné en rotation dans un stator et un régulateur de tension automatique (« AVR » ou « Automatic Voltage Regulator » selon la terminologie Anglo-Saxonne) agissant sur les enroulements rotoriques du rotor. Le régulateur de tension automatique applique, ainsi, une tension sur les enroulements rotoriques en fonction de la tension efficace $V_{rms}$ (de la tension V) délivrés par le stator (par le groupe électrogène) sur le micro réseau. Le contrôle par statisme tension/puissance réactive Q permet au groupe électrogène d'adapter la tension efficace $V_{rms}$ qu'il délivre en fonction de la puissance électrique réactive Q qu'il fournit.

Par ailleurs, le rotor d'un groupe électrogène est généralement entraîné en rotation, par un arbre d'un moteur thermique (par exemple un moteur diesel), à l'intérieur d'un stator. De par sa conception, le groupe électrogène est capable de former le réseau. Autrement dit, le groupe électrogène peut imposer la tension V et la fréquence f à un réseau électrique.

En outre, le rotor du groupe électrogène a une énergie cinétique de rotation qui est fonction de la masse et de la vitesse de rotation de son rotor, qui peut être transférée au micro réseau sous forme de puissance active P. Ainsi le groupe électrogène peut répondre à un appel de puissance de la part du micro réseau (une demande de consommation de puissance supplémentaire) en prélevant de l'énergie cinétique de l'arbre et en la transférant au micro réseau. Le groupe électrogène ajuste alors par statisme la fréquence f de la puissance active P délivrée. Le groupe électrogène est capable de répondre à une variation de demande de puissance active, nous disons que le groupe électrogène présente de l'inertie. De manière équivalente, le groupe électrogène peut répondre à une variation de demande de puissance réactive de la part du micro réseau.

Dès qu'il adapte la puissance réactive Q qu'il délivre au micro réseau, le groupe électrogène ajuste, par statisme, la tension efficace $V_{rms}$ de la tension V. La capacité du groupe électrogène à répondre à une variation de consommation de la puissance active P/réactive Q par le micro réseau peut être associée au concept de réserve primaire ou réserve tournante (« Spinning Reserve » selon la terminologie Anglo-Saxonne). Les concepts d'inertie et de réserve primaire d'un groupe électrogène sont modélisables dans des équations différentielles. Par exemple, parmi les équations différentielles, nous pouvons donner l'exemple de l'équation mécanique du rotor du groupe électrogène :

$$\frac{d\omega_r}{dt} = \frac{1}{2H_d}\Gamma_{mot} - \frac{1}{2H_d}\Gamma_e - \frac{D_d}{2H_d}\omega_r$$

$\omega_r$ est la vitesse angulaire du rotor, $\Gamma_{mot}$ est couple du moteur, $\Gamma_e$ est le couple électromagnétique du générateur synchrone, $H_d$ le moment d'inertie du rotor et $D_d$ le coefficient de friction. Les équations différentielles permettent de modéliser le comportement électrique et mécanique du générateur électrogène.

Le générateur virtuel 1, selon l'invention, est contrôlé par une loi de commande qui intègre les équations différentielles permettant de modéliser le fonctionnement (le comportement) du groupe électrogène. Ainsi le générateur virtuel 1 est configuré pour émuler le comportement d'un générateur synchrone, et plus particulièrement celui d'un groupe électrogène. La configuration du générateur virtuel 1 comprend alors la détermination des équations différentielles régissant le fonctionnement du générateur synchrone et du développement d'un programme d'ordinateur (ou d'un algorithme) basé sur lesdites équations différentielles. La configuration est connue des techniques de l'homme du métier, et est décrite dans le document [2].

Selon la présente invention, le générateur virtuel 1 est contrôlé par la loi de commande pour qu'il exécute un ajustement de la puissance active P/réactive Q délivrée au micro réseau, ledit ajustement étant adapté pour compenser une variation de la puissance active/réactive consommée par le micro réseau. La compensation de la variation de la puissance électrique active/réactive est exécutée de manière à équilibrer la puissance électrique active P/réactive Q délivrée par le générateur virtuel 1 avec la puissance électrique active P/réactive Q consommée par le micro réseau.

Le générateur virtuel 1 comprend une source d'énergie renouvelable 2, un système d'accumulation de puissance et/ou d'énergie 3, un onduleur 4, et la loi de commande.

Dans toute la suite de l'énoncé nous emploierons l'expression « système d'accumulation 3 » pour désigner le système d'accumulation de puissance et/ou d'énergie 3.

Tout au long de la description, un courant et une tension délivrés par l'onduleur 4 ou un courant et une tension délivrés par le générateur virtuel 1 aura le même sens.

La loi de commande peut comprendre différents blocs de commande. Par exemple, la loi de commande peut comprendre :

- un bloc 100 noté « Virtual Generator with droop »,
- un bloc 200 noté « DC bus regulation »,
- un bloc 210 noté « Constrained MPPT »,
- un bloc 220 noté « $P_{sr}$ calculation »,
- un bloc 230 noté « Power Storage overcharge management »,
- un bloc 240 noté « Power Storage state of charge estimator »,
- un bloc 250 noté « Power Storage undercharge management »,
- un bloc 260 noté « $P_{maxpv}$ estimator »,
- un bloc 300 noté « Midpoint regulation ».

Nous détaillerons dans la suite de la description la fonction des différents blocs en rapport avec la figure 1a.

La source d'énergie renouvelable 2 peut être soumise aux aléas climatiques, et par conséquent être une source d'énergie instable, nous la qualifions alors de source d'énergie renouvelable intermittente.

La source d'énergie renouvelable 2 peut comprendre des panneaux photovoltaïques, des éoliennes, des hydroliennes, des machines thermodynamiques.

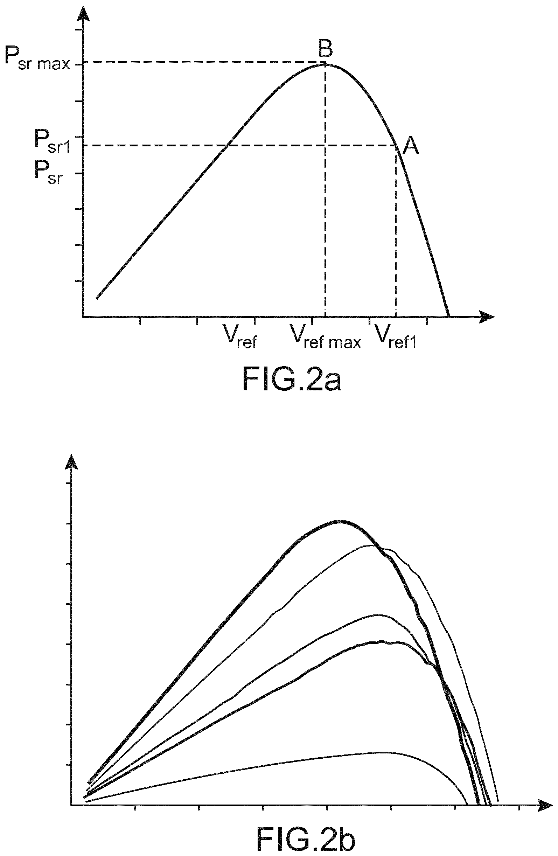

La source d'énergie renouvelable 2 comprend des premières bornes de sortie 2a susceptibles de délivrer un courant et une tension continus. La source d'énergie renouvelable 2 produit généralement une certaine puissance $P_{sr}$, délivrée par ses premières bornes de sortie 2a, en fonction de la tension $V_{ref}$ appliquée auxdites premières bornes de sortie 2a. Par exemple, tel qu'illustré à la figure 2a, pour un ensoleillement donné, des panneaux photovoltaïques produisent une puissance (selon l'axe $P_{sr}$ vertical) en forme de cloche en fonction de la tension (selon l'axe $V_{ref}$ horizontal) appliquée aux premières bornes de sortie 2a. Pour une tension $V_{ref}$ égale à $V_{ref1}$, le panneau photovoltaïque peut fournir la puissance $P_{sr1}$ (point A de la figure 2a), tandis qu'il peut fournir la puissance $P_{srmax}$ lorsque la tension $V_{ref}$ est égale à $V_{refmax}$ (point B de la figure 2a).

Le système d'accumulation 3 comprend des secondes bornes sortie 3c susceptibles de délivrer également un courant et une tension continus. Le système d'accumulation 3 peut comprendre un système de stockage 3a et un convertisseur DC/DC 3b (un convertisseur DC/DC transforme une tension continue en une autre tension continue). Le système de stockage 3a peut comprendre au moins une batterie électrochimique, un volant d'inertie, un condensateur (ou super condensateur). Nous entendons par super condensateur, un condensateur de technique particulière permettant d'obtenir une densité de puissance et une densité d'énergie intermédiaire entre les batteries et les condensateurs électrolytiques classiques. Par exemple, un super condensateur peut comprendre une densité de puissance comprise entre 1000 et 5000 W/Kg, et une densité d'énergie comprise entre 4 et 6 Wh/Kg. Le système de stockage 3a est adapté pour délivrer une tension $V_{PS}$ continue au convertisseur DC/DC 3b qui la convertit en une autre tension $V_{ref}$ continue délivrée par les secondes bornes de sortie 3c.

Les premières bornes 2a et les secondes bornes 3c de sortie sont électriquement connectées, par exemple en parallèle. Ainsi, le système d'accumulation 3 applique une tension $V_{ref}$ aux premières bornes de sortie 2a de la source d'énergie renouvelable 2, de sorte que la source d'énergie renouvelable 2 délivre une puissance $P_{sr}$. Le convertisseur DC/DC 3b peut être piloté par une première carte de contrôle asservie par la loi de commande. Le bloc 200 peut être adapté pour fournir au convertisseur DC/DC 3b un signal afin que ledit convertisseur 3b applique la tension $V_{ref}$ à appliquer aux premières bornes de la source d'énergie renouvelable 2. L'onduleur 4 peut, quant à lui, être piloté par une seconde carte de contrôle également asservie par la loi de commande. De manière alternative, le convertisseur DC/DC 3b et l'onduleur 4 peuvent être pilotés par la même carte de contrôle.

Les premières 2a et les secondes 3c bornes de sortie sont connectées à l'entrée de l'onduleur 4.

L'onduleur 4 est adapté pour convertir le courant et la tension continus, produits par la source d'énergie renouvelable 2 et/ou le système d'accumulation 3, en un courant et une tension alternatifs avant de les injecter sur le micro réseau.

La loi de commande peut avantageusement être un algorithme mis en place dans la ou les cartes de contrôle. Par ailleurs la première carte de contrôle et la seconde carte de contrôle peuvent communiquer entre elles. La communication entre la première carte de contrôle et la seconde carte de contrôle permet notamment d'échanger des informations entre lesdites cartes de contrôle. Parmi les informations échangées, nous pouvons citer : l'état de charge du système d'accumulation 3, les courants, tensions, et puissances mesurés aux premières 2a et secondes 3c bornes. La loi de commande est également adaptée pour mesurer la tension, le courant et la fréquence desdits tension et courant délivrés au micro réseau.

La loi de commande est adaptée pour contrôler la puissance renouvelable et la puissance d'accumulation fournies, respectivement, par la source d'énergie renouvelable 2 et le système d'accumulation 3. L'onduleur 4 délivre au micro réseau une puissance correspondant aux puissances fournies par la source d'énergie renouvelable 2 et le système d'accumulation 3. La puissance d'accumulation peut être une puissance négative, à savoir une puissance consommée par le système d'accumulation 3, ou une puissance positive, à savoir une puissance délivrée par ledit système 3. La puissance d'accumulation est positive, par exemple lorsque le système d'accumulation 3 débite de la puissance, à l'onduleur 4, destinée à être délivrée au micro réseau. La puissance d'accumulation est négative, par exemple, lorsque le système d'accumulation 3 se recharge en consommant de la puissance renouvelable. La loi de commande impose en permanence un équilibre entre les puissances renouvelable et d'accumulation et la puissance délivrée par l'onduleur 4 au micro réseau. Autrement dit, le bilan de puissance doit être équilibré.

Ainsi, la loi de commande de l'onduleur 4 impose que la somme des puissances renouvelable et d'accumulation soit égale à la puissance délivrée par l'onduleur 4 au micro réseau (nous insistons sur le fait que la puissance délivrée par l'onduleur 4 au micro réseau est effectivement consommée par le micro réseau).

La loi de commande, par exemple via le bloc 100, impose à l'onduleur 4 de délivrer un courant alternatif d'intensité $I_{abc}$. La valeur de référence du courant $I_{abc}$ peut être déterminée par le bloc 100 en fonction de la tension $V_{abc}$ délivrée par l'onduleur 4 et mesurée à sa sortie ($V_{abcmes}$). Ainsi l'onduleur 4 reproduit le courant $I_{abc}$ d'un groupe électrogène délivrant une tension $V_{abc}$, et répondant aux équations différentielles modélisant ledit groupe électrogène.

La loi de commande de l'onduleur 4 est également adaptée, selon de techniques connues de l'homme du métier, pour conférer au générateur virtuel 1 la possibilité de former le réseau (« Grid Forming » selon la terminologie Anglo-Saxonne). Ainsi, le générateur virtuel 1 peut être seul à fournir de la puissance électrique au micro réseau tout comme un groupe électrogène le ferait.

De manière particulièrement avantageuse, le générateur virtuel 1 présente un contrôle par statisme en fréquence f/puissance active P. Le contrôle par statisme en fréquence f/puissance active P est une caractéristique d'un générateur synchrone, tel qu'un groupe électrogène. Un groupe électrogène comprend généralement un arbre entraîné, par un moteur diesel, en rotation angulaire dont la fréquence correspond à la fréquence f du courant et de la tension produits par ledit groupe. La fréquence de l'arbre suit un contrôle par statisme fréquence f/puissance active P selon un loi présenté à la figure 3. Le contrôle par statisme fréquence f/puissance active P permet au groupe électrogène d'adapter la fréquence f du signal qu'il délivre en fonction de la puissance active P électrique qu'il fournit. Cet effet de statisme permet de connecter en parallèle différents groupes électrogènes qui délivreront un courant et une tension, sur le réseau, de même fréquence f. Dans le cadre du générateur virtuel 1 selon l'invention, la fréquence f du courant et de la tension délivré par ledit générateur virtuel 1 dépend des spécifications du micro réseau (« Grid code » selon la terminologie Anglo-Saxonne). Par exemple, la fréquence f peut être comprise entre 48 et 52 Hz, ou encore entre 49,5 et 50,5 Hz, ou entre 58 et 62 Hz, ou encore entre 59,5 et 60,5 Hz.

Toujours de manière particulièrement avantageuse, le générateur virtuel 1 présente, également, un contrôle par statisme en tension efficace $V_{rms}$/puissance réactive Q. Le contrôle par statisme en tension efficace $V_{rms}$/puissance réactive Q est une caractéristique d'un générateur synchrone, tel qu'un groupe électrogène. Un groupe électrogène comprend généralement un rotor entraîné en rotation dans un stator et un régulateur de tension automatique (« AVR » ou « Automatic Voltage Regulator » selon la terminologie Anglo-Saxonne) agissant sur les enroulements rotoriques du rotor. Le régulateur de tension automatique applique, ainsi, une tension sur le rotor en fonction d'une tension du signal électrique (donc de la puissance) délivré par le stator (par le groupe électrogène) sur le réseau. La tension efficace $V_{rms}$ du signal électrique délivré par le groupe électrogène suit un contrôle par statisme tension efficace $V_{rms}$/puissance réactive Q selon un loi présenté à la figure 4. Le contrôle par statisme tension efficace $V_{rms}$/puissance réactive Q permet au groupe électrogène d'adapter la tension efficace $V_{rms}$ de la tension qu'il délivre en fonction de la puissance électrique réactive Q qu'il fournit. Dans le cadre du générateur virtuel 1 selon l'invention, la tension délivrée par ledit générateur virtuel 1 dépend des spécifications du micro réseau (« Grid code » selon la terminologie Anglo-Saxonne).

Le contrôle par statisme en fréquence f/puissance active P ou en tension/puissance réactive Q peut être inclus dans la loi de commande du générateur virtuel 1 selon des techniques connue de l'homme du métier. A cet égard, le document [3] présente un méthode permettant d'asservir un onduleur selon un contrôle par statisme en fréquence f/puissance active P ou en tension efficace $V_{rms}$ /puissance réactive Q. Plus particulièrement, l'asservissement de l'onduleur selon un statisme en fréquence f/puissance active P ou en tension efficace $V_{rms}$ /puissance réactive Q peut être compris dans le bloc 100.

Le générateur virtuel 1 peut comprendre, dans le cas d'un onduleur 4 à trois niveaux, deux condensateurs C⁺ et C⁻ connectés entre eux en série pour former un condensateur équivalent C. Les bornes du condensateur équivalent C sont électriquement connectées, par exemple en parallèle aux premières bornes de sortie 2a de la source d'énergie renouvelable 2 (et par conséquent, également électriquement connectées en parallèle aux secondes bornes de sortie 3c de la source d'accumulation de puissance et/ou d'énergie 3). La loi de commande, par exemple le bloc 300, dans ce cas particulier d'un onduleur 4 à trois niveau, est adaptée pour équilibrer les tensions $V_{DC+}$ et $V_{DC-}$ mesurées aux bornes, respectivement, des deux condensateurs C⁺ et C⁻ afin de garantir une forme sinusoïdale non déformée du courant et de la tension délivrée par l'onduleur 4 au micro réseau. L'invention n'est cependant pas limitée à l'utilisation d'un onduleur à trois niveaux.

Le système d'accumulation 3 comprend le système de stockage 3a et le convertisseur DC/DC 3b. Les secondes bornes de sortie 3c sont les bornes de sortie du convertisseur DC/DC 3b. Ainsi, le convertisseur DC/DC 3b impose la tension $V_{ref}$ aux premières bornes de sortie 2a de la source d'énergie renouvelable 2. La tension $V_{ref}$ est le résultat de la conversion, par le convertisseur 3b, d'une tension continue aux bornes du système de stockage 3a. La valeur de la tension $V_{ref}$ est cependant une consigne imposée au bloc 200 de la loi de commande asservissant le convertisseur DC/DC.

En fonctionnement, la puissance délivrée par la source d'énergie renouvelable 2 est susceptible de présenter des fluctuations. Nous entendons par fluctuations, des variations rapides, par exemple sur des échelles de temps inférieures à 100 ms, voire même inférieures à 10 ms, de faible amplitude au regard de la grandeur considérée (dans le cas présent la puissance), par exemple inférieures à 5% de ladite grandeur. Dans le cas de panneaux photovoltaïques, les fluctuations de puissance peuvent, par exemple, être dues à des variations d'ensoleillement. Les fluctuations de puissance délivrée par la source d'énergie renouvelable 2 sont accessibles par mesure de l'intensité $I_{pv}$ du signal électrique produit par la source d'énergie renouvelable 2. Le système d'accumulation 3 est, avantageusement, asservi par la loi de commande pour compenser les fluctuations de la puissance délivrée par la source d'énergie renouvelable 2 aux bornes d'entrée de l'onduleur 4. Par compenser les fluctuations de la puissance délivrée, nous entendons limiter leur impact sur le micro réseau en les absorbant. Ainsi, le courant et de la tension délivrés par l'onduleur 4 au micro réseau sont exempt de fluctuations. Autrement dit, ils sont stables.

Toujours de manière avantageuse, la loi de commande permet de réguler la puissance de la source d'énergie renouvelable 2. En effet, la valeur de la tension $V_{ref}$ continue appliquée par le convertisseur DC/DC 3b aux premières bornes de sortie 2a de la source d'énergie renouvelable 2 est une consigne imposée par le bloc 210 de la loi de commande. La consigne imposée par la loi de commande peut avoir pour objectif de commander à la source d'énergie renouvelable 2 de délivrer soit un maximum de puissance, soit une puissance de saturation, la puissance de saturation étant inférieure à la puissance maximale que la source d'énergie renouvelable 2 peut délivrer. Par exemple, il est connu que la puissance délivrée par des panneaux photovoltaïques, pour un ensoleillement donné (voir figure 2b), est dépendante de la tension appliquée en leur bornes de sortie (les premières bornes). Ainsi, la loi de commande peut dans un premier temps déterminer la tension $V_{ref}$ à appliquer au premières bornes de sortie 2a du panneau photovoltaïque de sorte que ce dernier fournisse soit toute la puissance qu'il est capable de produire, à savoir $P_{srmax}$ (point B de la figure 2a) soit une puissance Psri inférieure à une puissance prédéterminée (Point A de la figure 2a). La puissance que la source d'énergie renouvelable 2 (ou plus particulièrement que le panneau photovoltaïque) doit produire est dépendante de conditions d'un état de charge du système de stockage 3a. Nous détaillerons la notion d'état de charge du système de stockage 3a dans la suite de la description. Ainsi, afin de déterminer la tension $V_{ref}$ à appliquer aux premières bornes, le bloc 210 de la loi de commande commande au convertisseur DC/DC 3b d'exécuter un balayage en tension des premières bornes de sortie 2a de la source d'énergie renouvelable 2. Pendant le balayage en tension, le courant $I_{pv}$ et la tension $V_{pv}$ débités par la source d'énergie renouvelable 2 sont mesurés par le bloc 220 de sorte que la puissance $P_{sr}$ délivrée par ladite source est connue. Le balayage en tension $V_{ref}$ est exécuté par incrément successifs, dans le sens des puissances croissantes par exemple, jusqu'à ce que la source d'énergie renouvelable 2 délivre la puissance désirée (la puissance délivrable par la source d'énergie renouvelable 2 est néanmoins limitée à une puissance $P_{srmax}$). Le balayage en tension peut être exécuté en moins de 10 secondes, par exemple 5 secondes.

Pendant le balayage en tension, le système d'accumulation 3 compense la variation de la puissance délivrée par la source d'énergie renouvelable 2 de sorte qu'il y ait toujours équilibre entre la puissance consommée par le micro réseau et la puissance délivrée par le générateur virtuel 1. La compensation en puissance est, également, pilotée par la loi de commande, de manière à assurer constamment l'équilibre entre puissance consommée et puissance produite.

De manière alternative, le bloc 260, à partir de données techniques connues de la source d'énergie renouvelable (par exemple les courbes de puissance de panneaux photovoltaïques en fonction de l'ensoleillement et la température), il est possible d'estimer la puissance maximale que peut délivrer la source d'énergie renouvelable et la communiquer au bloc 210.

La loi de commande peut également être adaptée pour limiter l'état de charge du système d'accumulation 3 à un état de charge (« SoC » ou « State of Charge » selon la terminologie Anglo-Saxonne) maximum $SoC_{max}$. En effet, afin de ne pas détériorer le système d'accumulation 3, il est préférable que son état de charge ne dépasse pas, par exemple, 100% de charge, voire 95% de charge. Ainsi, tant que l'état de charge est inférieur à $SoC_{max}$, le système d'accumulation 3 peut emmagasiner, au moins en partie, tout surplus de puissance délivré par la source d'énergie renouvelable 2 et non consommé par le micro réseau. Le système d'accumulation 3 fournit alors une puissance négative. Inversement, dès lors que le système d'accumulation 3 est dans un état de charge, au moins, égal à l'état de charge maximal $SoC_{max}$, le système d'accumulation 3 ne peut plus emmagasiner un éventuel surplus de puissance délivré par la source d'énergie renouvelable 2. Ainsi, il peut être nécessaire de limiter la puissance délivrée par la source d'énergie renouvelable 2 à une puissance maximale saturante $P_{srsatmax}$. La puissance maximale saturante $P_{srsatmax}$ est alors adaptée pour être consommée intégralement par le micro réseau. A cet égard, le bloc 240 de la loi de commande peut estimer en permanence l'état de charge $SoC_{PSest}$ du système d'accumulation 3. L'estimation de l'état de charge peut, par exemple, être obtenue par mesure de la tension Vps mesurées aux bornes du système de stockage 3a.

Cette estimation communiquée au bloc 230 est alors comparée l'état de charge $SoC_{max}$. Le bloc 230 fournit donc de manière dynamique la valeur de référence $P_{srsatmax}$ de puissance maximale saturante qui peut être fournie par la source d'énergie renouvelable 2 lorsque l'état de charge du système d'accumulation 3 dépasse $SoC_{max}$. Dès lors que l'état de charge $SoC_{PSest}$ atteint la valeur $SoC_{max}$ ou la dépasse, le bloc 230 communique la valeur de référence $P_{srsatmax}$ au bloc 210 (la valeur $P_{srsatmax}$ étant également la valeur de puissance maximale que le micro réseau peut consommer). La valeur de référence de la tension $V_{ref}$ déterminée par le bloc 210 est alors adaptée pour que la puissance délivrée par la source d'énergie renouvelable 2 soit inférieure ou égale $P_{srsatmax}$.

Ainsi, afin de conserver un équilibre entre la puissance consommée par le micro réseau et la puissance produite par le générateur virtuel 1, le bloc 230 de la loi de commande peut imposer à la source d'énergie renouvelable 2 de limiter la puissance qu'elle délivre à une puissance $P_{srsatmax}$. La puissance $P_{srsatmax}$ étant intégralement consommée par le micro réseau. En pareil cas de figure, la loi de commande permet de déterminer la tension $V_{ref}$ à appliquer aux premières bornes de sorte que toute la puissance délivrée par la source d'énergie renouvelable 2 soit entièrement consommée par le micro réseau.

Le bloc 250 de la loi de commande est également adaptée pour assurer un état de charge minimum, $SoC_{min}$, du système d'accumulation 3 de manière à garantir un bon fonctionnement du générateur virtuel 1. A cet égard, la loi de commande peut limiter la puissance active P délivrée, $P_{meca}$, par l'onduleur 4, de manière à détourner une partie de la puissance délivrée par la source d'énergie renouvelable 2 vers le système d'accumulation 3 de manière à rétablir un état de charge suffisant de ce dernier. Cela revient à agir (limiter) de manière le couple moteur virtuel du générateur virtuel 1, afin de limiter la puissance produite par le générateur virtuel 1 vers le micro réseau.

De manière particulièrement avantageuse, l'état de charge nominal $SoC_{nom}$ peut être relatif à une puissance devant être délivrée au micro réseau pendant la phase de démarrage, d'une durée T, d'un groupe électrogène également connecté au micro réseau. Plus particulièrement, l'état de charge nominal, $SoC_{nom}$ du système d'accumulation 3 peut être défini comme la puissance active maximale que peut délivrer le groupe électrogène pendant la durée T lorsqu'il est en plein régime. Par phase de démarrage du groupe électrogène, nous entendons démarrer, chauffer, et synchroniser le courant et de la tension par rapport au micro réseau. Ainsi, dès lors que la source d'énergie renouvelable 2 réduit de manière significative sa production de puissance, le système d'accumulation 3 prend le relais, et délivre à son tour la puissance nécessaire pour alimenter le micro réseau.

Dès lors que l'état de charge du système d'accumulation franchit à la baisse l'état de charge nominal $SoC_{nom}$ le groupe électrogène peut recevoir l'ordre de démarrer. Cette séquence permet ainsi d'assurer une continuité de la distribution du courant et de la tension et ceci de manière stable. A cet égard, la loi de commande est adaptée pour détecter toute baisse de production de la puissance (déficit de puissance) par la source d'énergie renouvelable 2, et imposer au système d'accumulation 3 de compenser le déficit de puissance. La loi de commande détecte par exemple le déficit de puissance par mesure du courant $I_{pv}$ aux premières bornes de sortie 2a. Le groupe électrogène peut recevoir l'ordre de démarrer dès lors que la puissance disponible dans le système d'accumulation franchit à la baisse un état de charge seuil $SoC_s$.

Ainsi, la loi de commande détermine en permanence l'état de charge SoC du système d'accumulation 3 par mesure de la tension $V_{PS}$ aux bornes de sortie du système de stockage 3a. En parallèle, la loi de commande régule la tension $V_{ref}$ de manière à assurer un équilibre entre la puissance consommée par le micro réseau et la puissance fournie par le générateur virtuel 1.

Ainsi, lorsque l'état de charge SoC du système d'accumulation 3 est inférieur à $SoC_{max}$, la loi de commande impose à la source d'énergie renouvelable 2 de délivrer toute la puissance qu'elle peut produire en ajustant la tension $V_{ref}$. Dès lors que l'état de charge SoC atteint la valeur $SoC_{max}$, la loi de commande au système d'accumulation 3 d'ajuster la tension $V_{ref}$ de sorte que la puissance fournie par la source d'énergie renouvelable 2 soit intégralement consommée par le micro réseau.

Ainsi, de manière particulièrement avantageuse, l'invention permet également à l'onduleur, même en étant saturé en puissance, de fonctionner en parallèle avec d'autre sources de puissance et de garder ainsi le micro réseau stable. Ce résultat est atteint en saturant le couple moteur virtuel du générateur virtuel 1 de sorte que la puissance mécanique virtuelle maximum pouvant être délivré par l'onduleur est toujours inférieur à une puissance électrique maximale. Ladite puissance maximale étant une caractéristique associée au courant maximum que peut délivrer un onduleur sans risquer d'être endommagé. Ainsi, même si le générateur virtuel entre en saturation de puissance, une action sur le couple mécanique virtuel destiné à limiter la puissance délivrable par ledit onduleur permet de conserver la stabilité du micro réseau.

Ainsi, selon la présente invention, il est possible d'obtenir un générateur virtuel 1 présentant la stabilité d'un groupe électrogène. Plus particulièrement, le générateur virtuel 1 selon l'invention permet de réduire les impacts des fluctuations de puissance de la source d'énergie renouvelable sur le micro réseau.

Par ailleurs, en cas d'appel de puissance de la part du micro réseau, le générateur virtuel 1 réagit comme un groupe électrogène. Il ajuste, dans un premier temps, la fréquence f du courant et de la tension qu'il délivre à une fréquence f plus basse pour répondre à l'appel de puissance en prélevant de la puissance de la réserve de puissance du système d'accumulation 3. Cette possibilité de répondre à l'appel de puissance du micro réseau confère au générateur virtuel 1 l'inertie d'un groupe électrogène. L'inertie du générateur virtuel 1, selon l'invention, est régie par les équations différentielles de la loi de commande et le système d'accumulation de puissance 3. Un générateur virtuel 1 dépourvu de système d'accumulation 3 ne présente pas d'inertie, et ne peut par conséquent pas répondre à un appel de puissance de la part du micro réseau.

Ainsi, la réserve primaire du générateur virtuel 1 permet de répondre favorablement à une augmentation de la consommation de puissance par le micro réseau.

La flexibilité de fonctionnement ainsi conférée au générateur virtuel 1 ouvre la voie à une augmentation du taux de pénétration des sources d'énergie renouvelable.

Ainsi, dès lors que la source d'énergie renouvelable diminue sensiblement ou stoppe sa production de puissance électrique, le générateur virtuel 1 selon l'invention dispose de la puissance nécessaire pour alimenter le micro réseau pendant la phase de démarrage du groupe électrogène.

Ainsi, il est possible lors des cycles de forte productions de puissance électrique par les sources d'énergie renouvelable 2, d'avoir une forte proportion, par exemple 100% (ce qui revient à éteindre les groupes électrogènes) de la puissance électrique produite émanant des sources d'énergie renouvelable 2. Nous parlons d'un fort taux de pénétration des énergies renouvelable 2. Les groupes électrogènes ne sont utilisés qu'en cas d'insuffisance de puissance électrique produite par les sources d'énergie renouvelable. L'inertie du générateur virtuel 1 induite par le système d'accumulation et la loi de commande lui confère ainsi la stabilité nécessaire au bon fonctionnement du réseau.

Le générateur virtuel 1 est soumis à la loi de commande permettant de détecter en permanence les fluctuations de puissance électrique produite par la source d'énergie renouvelable. La loi de commande asservit alors le système d'accumulation de sorte qu'il délivre également de la puissance électrique pendant un creux de fluctuation de la puissance produite de la source d'énergie renouvelable. La compensation des fluctuations par le système d'accumulation permet de conférer au procédé de contrôle l'inertie observée dans un générateur synchrone tel qu'un groupe électrogène, nous parlons également de stabilité du système de production d'énergie à base d'au moins une source d'énergie renouvelable.

## RÉFÉRENCES

[1] Hussam Alatrash et. al., "Generator Emulation Controls for Photovoltaic Inverters", IEEE TRANSACTIONS ON SMART GRID, Vol. 3, No. 2, June 2012;
[2] PRABHA KUNDUR, "Power System Stability and Control", ISBN 0-07-035958-X;
[3] WO 2012116559 A1.

## Revendications

1. Procédé de contrôle d'un générateur virtuel (1) comprenant au moins une source d'énergie renouvelable (2), un système d'accumulation (3) comprenant une réserve de puissance et/ou d'énergie, un onduleur (4) et une loi de commande, le générateur virtuel (1) délivrant à un micro réseau une puissance électrique active P/réactive Q de tension V et de courant I, lesdits tension V et courant I présentant une fréquence f, lesdites puissance électrique active P/réactive Q contrôlant par statisme, respectivement, la fréquence f et la tension efficace $V_{rms}$ de la tension V, le procédé étant **caractérisé en ce qu'**il comprend un contrôle du générateur virtuel (1) par la loi de commande pour qu'il exécute un ajustement de la puissance active P/réactive Q délivrée au micro réseau, ledit ajustement étant adapté pour compenser une variation de la puissance active/réactive consommée par le micro réseau, le système d'accumulation (3) applique une tension $V_{ref}$ continue à des première bornes (2a) de la source d'énergie renouvelable (2) de sorte que la source d'énergie renouvelable (2) délivre une puissance $P_{sr}$, ladite puissance $P_{sr}$ est susceptible de présenter des fluctuations de puissance, le système d'accumulation (3) est contrôlé pour compenser les fluctuations.

2. Procédé selon la revendication 1, dans lequel la loi de commande est adaptée pour conférer au générateur virtuel (1), avantageusement via l'onduleur (4), la possibilité de former le réseau.

3. Procédé selon la revendication 1 ou 2, dans lequel la loi de commande est adaptée pour connecter en parallèle le générateur virtuel (1) avec des groupes électrogènes.

4. Procédé selon l'une des revendications 1 à 3, dans lequel la tension $V_{ref}$ continue appliquée aux premières bornes de sortie (2a) est le résultat de la conversion d'une tension $V_{PS}$ continue, aux bornes d'un système de stockage, par un convertisseur DC/DC, le système de stockage et le convertisseur DC/DC étant compris dans le système d'accumulation (3).

5. Procédé selon l'une des revendications 1 à 4, dans lequel la tension $V_{ref}$ est déterminée en fonction d'une puissance $P_{sr}$ de consigne que doit délivrer la source d'énergie renouvelable (2), la tension est imposée par le système d'accumulation (3).

6. Procédé selon l'une des revendications 1 à 5, dans lequel la tension $V_{ref}$ est déterminée par un balayage, par exemple par paliers, en tension des premières bornes de sortie (2a), et par mesure de manière simultanée de l'intensité du courant produit par la source d'énergie renouvelable (2) et de ladite tension.

7. Procédé selon la revendication 6, dans lequel le balayage en tension produit des variations de puissance de la puissance délivrée par la source d'énergie renouvelable (2), le système d'accumulation (3) est contrôlé pour compenser lesdites variations pendant ledit balayage.

8. Procédé selon l'une des revendications 1 à 7, comprenant une étape de mesure d'un état de charge du système d'accumulation (3).

9. Procédé selon l'une des revendications 1 à 8, dans lequel la tension $V_{ref}$ est ajustée de sorte que, dès lors que le système d'accumulation (3) présente un état de charge supérieur ou égal à un seuil de charge maximum $SoC_{max}$ prédéterminé, la puissance $P_{sr}$ est intégralement consommée par le micro réseau.

10. Procédé selon l'une des revendications 1 à 9, dans lequel l'état de charge du système d'accumulation (3) est maintenu à une valeur supérieure à un état de charge minimum $SoC_{min}$.

11. Procédé selon l'une des revendications 1 à 10, dans lequel une puissance $P_{acc}$ est délivrée par le système d'accumulation (3) au micro réseau, via l'onduleur (4), dès lors que ledit micro réseau doit consommer un surplus de puissance $P_{sur}$ que la source d'énergie renouvelable (2) n'est pas en mesure de fournir.

12. Générateur virtuel (1) adapté pour délivrer une puissance électrique active P/réactive Q avec une tension de fréquence f et de tension efficace $V_{rms}$ à un micro réseau comprenant :

   - une source d'énergie renouvelable (2) ;
   - un système d'accumulation (3) comprenant une réserve de puissance et/ou d'énergie ;
   - un onduleur (4) ;
   - une loi de commande ;

   la loi de commande étant adaptée pour contrôler le générateur virtuel (1) de sorte que le générateur virtuel (1) délivre au micro réseau une puissance électrique active P/réactive Q de tension V et de courant I, lesdits tension V et courant I présentant une fréquence f, lesdites puissance électrique active P/réactive Q contrôlent par statisme, respectivement, la fréquence f et la tension efficace $V_{rms}$ de la tension V,
   le générateur virtuel (1) étant **caractérisé en ce qu'**il exécute un ajustement de la puissance active P/réactive Q délivrée au micro réseau dès lors qu'une variation de la puissance active/réactive consommée par le micro réseau intervient, ledit ajustement étant adapté pour compenser la variation de puissance active/réactive consommée, le système d'accumulation (3) comprend un système de stockage et un convertisseur DC/DC, le convertisseur DC/DC reliant des bornes de sortie du système de stockage à des premières bornes de sortie (2a) de la source d'énergie renouvelable (2), et est adapté pour délivrer une tension $V_{ref}$ aux premières bornes de sortie (2a), selon une consigne imposée par la loi de commande, à partir d'une tension $V_{PS}$ continue délivrée aux bornes de sortie du système de stockage.

13. Générateur virtuel (1) selon la revendication 12, dans lequel la loi de commande est adaptée pour conférer au générateur virtuel (1), avantageusement via l'onduleur (4), la possibilité de former le réseau.

14. Générateur virtuel (1) selon la revendication 12 ou 13, dans lequel la loi de commande est adaptée pour connecter en parallèle le générateur virtuel (1) avec des groupes électrogènes.

15. Générateur virtuel (1) selon la revendication 14, dans lequel la loi de commande est adaptée pour déterminer la tension $V_{ref}$ en fonction d'une puissance $P_{sr}$ de consigne que doit délivrer la source d'énergie renouvelable (2) via le système d'accumulation (3).

**16.** Générateur virtuel (1) selon la revendication 15, dans lequel le système d'accumulation (3) est adapté pour exécuter un balayage en tension des premières bornes de sortie (2a), et pour mesurer de manière simultanée l'intensité du courant produit par la source d'énergie renouvelable (2) et ladite tension.

**17.** Générateur virtuel (1) selon l'une des revendications 12 à 16, dans lequel la loi de commande est adaptée pour imposer au système d'accumulation (3) de compenser des fluctuations de la puissance délivrée par la source d'énergie renouvelable (2).

**18.** Générateur virtuel (1) selon l'une des revendications 12 à 17, dans lequel la source d'énergie renouvelable (2) comprend des panneaux photovoltaïques.

**19.** Générateur virtuel (1) selon l'une des revendications 12 à 17, dans lequel la source d'énergie renouvelable (2) comprend des éoliennes.

**Patentansprüche**

**1.** Verfahren zum Regeln eines virtuellen Generators (1), umfassend zumindest eine erneuerbare Energiequelle (2), ein Akkumulationssystem (3) mit einer Leistungs- und/oder Energiereserve, einen Wechselrichter (4) und ein Regelungsgesetz, wobei der virtuelle Generator (1) einem Mikronetz eine Wirkleistung P/Blindleistung Q aus Spannung V und Strom I bereitstellt, wobei die Spannung V und der Strom I eine Frequenz f aufweisen, wobei die Wirkleistung P/Blindleistung Q die Frequenz f und die Effektivspannung $V_{rms}$ der Spannung V jeweils durch Statik regeln,
wobei das Verfahren **dadurch gekennzeichnet ist, dass** es eine Regelung des virtuellen Generators (1) durch das Regelungsgesetz umfasst, so dass er eine Anpassung der dem Mikronetz bereitgestellten Wirkleistung P/Blindleistung Q durchführt, wobei die Anpassung dazu ausgelegt ist, eine Änderung der von dem Mikronetz aufgenommenen Wirkleistung/Blindleistung zu kompensieren, wobei das Akkumulationssystem (3) eine Gleichspannung $V_{ref}$ an erste Anschlussklemmen (2a) der erneuerbaren Energiequelle (2) anlegt, so dass die erneuerbare Energiequelle (2) eine Leistung $P_{sr}$ bereitstellt, wobei die Leistung $P_{sr}$ Leistungsschwankungen aufweisen kann, wobei das Akkumulationssystem (3) dazu geregelt wird, die Schwankungen zu kompensieren.

**2.** Verfahren nach Anspruch 1, wobei das Regelungsgesetz dazu ausgelegt ist, dem virtuellen Generator (1) vorteilhaft über den Wechselrichter (4) die Möglichkeit zu bieten, das Netz zu bilden.

**3.** Verfahren nach Anspruch 1 oder 2, wobei das Regelungsgesetz dazu ausgelegt ist, den virtuellen Generator (1) mit Stromgeneratoren parallel zu schalten.

**4.** Verfahren nach einem der Ansprüche 1 bis 3, wobei die an die ersten Ausgangsklemmen (2a) angelegte Gleichspannung $V_{ref}$ das Ergebnis der Umwandlung einer Gleichspannung $V_{PS}$ an den Anschlussklemmen eines Speichersystems über einen DC/DC-Wandler ist, wobei das Speichersystem und der DC/DC-Wandler in dem Akkumulationssystem (3) enthalten sind.

**5.** Verfahren nach einem der Ansprüche 1 bis 4, wobei die Spannung $V_{ref}$ in Abhängigkeit von einer Sollleistung $P_{sr}$ bestimmt wird, welche die erneuerbare Energiequelle (2) bereitstellen soll, wobei die Spannung von dem Akkumulationssystem (3) vorgegeben wird.

**6.** Verfahren nach einem der Ansprüche 1 bis 5, wobei die Spannung $V_{ref}$ durch beispielsweise schrittweises Abtasten der Spannung der ersten Ausgangsklemmen (2a) und durch gleichzeitiges Messen der Stromstärke des von der erneuerbaren Energiequelle (2) erzeugten Stroms und der Spannung bestimmt wird.

**7.** Verfahren nach Anspruch 6, wobei die Spannungsabtastung Leistungsänderungen der von der erneuerbaren Energiequelle (2) bereitgestellten Leistung erzeugt, wobei das Akkumulationssystem (3) dazu geregelt wird, die Änderungen während der Abtastung zu kompensieren.

**8.** Verfahren nach einem der Ansprüche 1 bis 7, umfassend einen Schritt des Messens eines Ladezustands des Akkumulationssystems (3).

**9.** Verfahren nach einem der Ansprüche 1 bis 8, wobei die Spannung $V_{ref}$ so angepasst wird, dass die Leistung $P_{sr}$ von dem Mikronetz integral aufgenommen wird, wenn das Akkumulationssystem (3) einen Ladezustand höher oder gleich einem vorbestimmten maximalen Ladeschwellwert $SoC_{max}$ aufweist.

**10.** Verfahren nach einem der Ansprüche 1 bis 9, wobei der Ladezustand des Akkumulationssystems (3) auf einem Wert gehalten wird, der höher als ein minimaler Ladezustand $SoC_{min}$ ist.

**11.** Verfahren nach einem der Ansprüche 1 bis 10, wobei dem Mikronetz von dem Akkumulationssystem (3) eine Leistung $P_{acc}$ über den Wechselrichter (4) bereitgestellt wird, wenn das Mikronetz eine Überleistung $P_{sur}$ aufnehmen soll, welche die erneuerbare Energiequelle (2) nicht aufbringen kann.

**12.** Virtueller Generator (1), der dazu ausgelegt ist, einem Mikronetz eine Wirkleistung P/Blindleistung Q mit einer der Spannung der Frequenz f und der Effektivspannung $V_{rms}$ bereitzustellen, enthaltend:

- eine erneuerbare Energiequelle (2);
- ein Akkumulationssystem (3), das eine Leistungs- und/oder Energiereserve umfasst;
- einen Wechselrichter (4);
- ein Regelungsgesetz;

wobei das Regelungsgesetz dazu ausgelegt ist, den virtuellen Generator (1) so zu regeln, dass der virtuelle Generator (1) dem Mikronetz eine Wirkleistung P/Blindleistung Q aus Spannung V und Strom I liefert, wobei die Spannung V und der Strom I eine Frequenz f aufweisen, wobei die Wirkleistung P/Blindleistung Q die Frequenz f und der Effektivspannung $V_{rms}$ der Spannung V jeweils durch Statik regeln, wobei der virtuelle Generator (1) **dadurch gekennzeichnet ist, dass** er eine Anpassung der dem Mikronetz bereitgestellten Wirkleistung P/Blindleistung Q durchführt, wenn eine Änderung der von dem Mikronetz aufgenommenen Wirkleistung/Blindleistung auftritt, wobei die Anpassung dazu ausgelegt ist, eine Änderung der aufgenommenen Wirkleistung/Blindleistung zu kompensieren, wobei das Akkumulationssystem (3) ein Speichersystem und einen DC/DC-Wandler enthält, wobei der DC/DC-Wandler die Ausgangsklemmen des Speichersystems mit ersten Ausgangsklemmen (2a) der erneuerbaren Energiequelle (2) verbindet und dazu ausgelegt ist, den ersten Ausgangsklemmen (2a) eine Spannung $V_{ref}$ je nach durch das Regelungsgesetz vorgegebenem Sollwert ausgehend von einer den Ausgangsklemmen des Speichersystems bereitgestellten Gleichspannung $V_{PS}$ bereitzustellen.

**13.** Virtueller Generator (1) nach Anspruch 12, wobei das Regelungsgesetz dazu ausgelegt ist, dem virtuellen Generator (1) vorteilhaft über den Wechselrichter (4) die Möglichkeit zu bieten, das Netz zu bilden.

**14.** Virtueller Generator (1) nach Anspruch 12 oder 13, wobei das Regelungsgesetz dazu ausgelegt ist, den virtuellen Generator (1) mit Stromgeneratoren parallel zu schalten.

**15.** Virtueller Generator (1) nach Anspruch 14, wobei das Regelungsgesetz dazu ausgelegt ist, die Spannung $V_{ref}$ in Abhängigkeit von einer Sollleistung $P_{sr}$ zu bestimmen, welche die erneuerbare Energiequelle (2) über das Akkumulationssystem (3) bereitstellen soll.

**16.** Virtueller Generator (1) nach Anspruch 15, wobei das Akkumulationssystem (3) dazu ausgelegt ist, eine Spannungsabtastung der ersten Ausgangsklemmen (2a) durchzuführen und gleichzeitig die Stromstärke des von der erneuerbaren Energiequelle (2) erzeugten Stroms und die Spannung zu messen.

**17.** Virtueller Generator (1) nach einem der Ansprüche 12 bis 16, wobei das Regelungsgesetz dazu ausgelegt ist, dem Akkumulationssystem (3) vorzugeben, Schwankungen der von der erneuerbaren Energiequelle (2) bereitgestellten Leistung zu kompensieren.

**18.** Virtueller Generator (1) nach einem der Ansprüche 12 bis 17, wobei die erneuerbare Energiequelle (2) Photovoltaikpaneele enthält.

**19.** Virtueller Generator (1) nach einem der Ansprüche 12 bis 17, wobei die erneuerbare Energiequelle (2) Windkraftanlagen enthält.

## Claims

**1.** Method for controlling a virtual generator (1) comprising at least one renewable power source (2), an accumulation system (3) comprising a power and/or energy reserve, an inverter (4) and a control law, the virtual generator (1) delivering to a microgrid an active P/reactive Q electrical power with a voltage V and a current I, said voltage V and current I having a frequency f, said active/reactive electrical power controlling, via droop control, the frequency f and the RMS voltage $V_{rms}$ of the voltage V, respectively, the method being **characterized in that** it comprises a control of the virtual generator (1) via the control law for which it carries out an adjustment of the active/reactive power delivered to the microgrid, said adjustment being capable of compensating for a variation in the active/reactive power consumed by the microgrid, the accumulation system (3) applies a DC voltage $V_{ref}$ to first terminals (2a) of the renewable power source (2) so that the renewable power source (2) delivers a power $P_{sr}$, said power $P_{sr}$ being liable to exhibit power fluctuations, the accumulation system (3) being controlled in order to compensate for said fluctuations.

**2.** Method according to Claim 1, in which the control law is capable of endowing the virtual generator (1) with the possibility to form the grid, advantageously via the inverter (4).

**3.** Method according to Claim 1 or 2, in which the control law is capable of connecting the virtual generator (1) in parallel with generator sets.

**4.** Method according to one of Claims 1 to 3, in which the DC voltage $V_{ref}$ applied to the first output terminals (2a) is the result of the conversion of a DC voltage $V_{PS}$, at the terminals of a storage system, by a DC/DC converter, the storage system and the DC/DC converter being included within the accumulation system (3).

5. Method according to one of Claims 1 to 4, in which the voltage $V_{ref}$ is determined as a function of a setpoint power $P_{sr}$ that the renewable power source (2) must be deliver, the voltage being imposed by the accumulation system (3).

6. Method according to one of Claims 1 to 5, in which the voltage $V_{ref}$ is determined by a voltage sweep, for example in stages, of the first output terminals (2a), and by simultaneously measuring the amperage of the current produced by the renewable power source (2) and said voltage $V_{ref}$.

7. Method according to Claim 6, in which the voltage sweep produces power variations in the power delivered by the renewable power source (2), the accumulation system (3) is controlled in order to compensate for said variations during said sweep.

8. Method according to one of Claims 1 to 7, comprising a step of measuring a state of charge of the accumulation system (3).

9. Method according to one of Claims 1 to 8, in which the voltage $V_{ref}$ is adjusted so that, when the state of charge of the accumulation system (3) is above or equal to a predetermined maximum charge threshold $SoC_{max}$, the power $P_{sr}$ is entirely consumed by the microgrid.

10. Method according to one of Claims 1 to 9, in which the state of charge of the accumulation system (3) is maintained at a value that is higher than a minimum state of charge $SoC_{min}$.

11. Method according to one of Claims 1 to 10, in which a power $P_{acc}$ is delivered by the accumulation system (3) to the microgrid, via the inverter (4), when said microgrid has to consume extra power $P_{sur}$ that the renewable power source (2) is unable to provide.

12. Virtual generator (1) capable of delivering an active P/reactive Q electrical power, with a voltage of frequency f and RMS voltage $V_{rms}$, to a microgrid comprising:

   - a renewable power source (2);
   - an accumulation system (3) comprising a power and/or energy reserve;
   - an inverter (4);
   - a control law;

the control law being capable of controlling the virtual generator (1) so that the virtual generator (1) delivers an active P/reactive Q electrical power having a voltage V and a current I to the microgrid, said voltage V and current I having a frequency f, said active P/reactive Q electrical power controlling, via droop control, the frequency f and the RMS voltage $V_{rms}$ of the voltage V, respectively,

the virtual generator being **characterized in that** it carries out an adjustment of the active/reactive power delivered to the microgrid when a variation in the active/reactive power consumed by the microgrid occurs, said adjustment being capable of compensating for the variation in the active/reactive power consumed, the accumulation system (3) comprises a storage system and a DC/DC converter, the DC/DC converter connecting the output terminals of the storage system to first output terminals (2a) of the renewable power source (2), and the accumulation system (3) is capable of delivering a voltage $V_{ref}$ to the first output terminals (2a), according to a setpoint imposed by the control law, from a DC voltage $V_{PS}$ delivered to the output terminals of the storage system.

13. Virtual generator (1) according to Claim 12, in which the control law is capable of endowing the virtual generator (1) with the possibility to form the grid, advantageously via the inverter (4).

14. Virtual generator (1) according to Claim 12 or 13, in which the control law is capable of connecting the virtual generator (1) in parallel with generator sets.

15. Virtual generator (1) according to one of Claims 12 to 14, in which the control law is capable of determining the voltage $V_{ref}$ as a function of a setpoint power $P_{sr}$ that must be delivered by the renewable power source (2) via the accumulation system (3).

16. Virtual generator (1) according to Claim 15, in which the accumulation system (3) is capable of carrying out a voltage sweep of the first output terminals (2a), and of simultaneously measuring the amperage of the current produced by the renewable power source (2) and said voltage.

17. Virtual generator (1) according to one of Claims 12 to 16, in which the control law is capable of making the accumulation system (3) compensate for fluctuations in the power delivered by the renewable power source (2).

18. Virtual generator (1) according to one of Claims 12 to 17, in which the renewable power source (2) comprises photovoltaic panels.

19. Virtual generator (1) according to one of Claims 12 to 17, in which the renewable power source (2) comprises wind turbines.

FIG.1a

EP 3 208 907 B1

FIG.1b

18

FIG.2a

FIG.2b

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015115721 A

- WO 2012116559 A1

**Littérature non-brevet citée dans la description**

- **TORRES et al.** Virtual Synchronous Generator: A Control Strategy to Improve Dynamic Frequency Control in Autonomous Power Systems. *Energy and Power Engineering,* 2013, vol. 5, 32-38

- **HUSSAM ALATRASH.** Generator Emulation Controls for Photovoltaic Inverters. *IEEE TRANSACTIONS ON SMART GRID,* Juin 2012, vol. 3 (2
- **PRABHA KUNDUR.** *Power System Stability and Control,* ISBN 0-07-035958-X